# EUROPÄISCHE PATENTANMELDUNG

(11) **EP 4 343 545 A1**
(43) Veröffentlichungstag der Anmeldung: **27.03.2024**
(21) Anmeldenummer: 22196855.5
(22) Anmeldetag: 21.09.2022
(51) Int. Cl.: G06F 9/455, G06F 11/36

(54) **AUTOMATISCHE ZUWEISUNG GEÄNDERTER BERECHTIGUNGEN ZU DIAGNOSEZWECKEN FÜR BEREITS GESTARTETE ARBEITS-CONTAINERINSTANZEN**

(71) Anmelder: Siemens Aktiengesellschaft, 80333 München (DE)
(72) Erfinder: Knierim, Christian, 81373 München (DE)
(74) Vertreter: Siemens Patent Attorneys

(57) **Zusammenfassung**

Verfahren zur automatischen Zuweisung geänderter Berechtigungen zu Diagnosezwecken für bereits gestartete Arbeits-Containerinstanzen (34), die mindestens eine durch Container implementierte Anwendung auf einem Gerät (30) bereitstellen, umfassend:
in einer Re-Konfigurationseinheit (23, 33) einer Laufzeitumgebung (32) des Geräts (30) oder einer Orchestrierungseinrichtung (20),
- Empfangen (S1) einer Konfigurationsinformation zum Starten einer Containerinstanz, Identifizieren (S2) einer Diagnose-Konfigurationsinformation zur Bereitstellung von mindestens einer Diagnose-Containerinstanz (35) einer Diagnose-Applikation, der Diagnosetätigkeiten in Bezug auf den mindestens eine Arbeits-Containerinstanz der vorbestimmten Anwendung ausführt,

Abrufen (S3) bestehender Arbeits-Containerinstanzen von einer Klassifizierungsdatenbank (40), Ermitteln (S4) eines Re-Konfigurationsbedarfs der abgerufenen Arbeits-Containerinstanzen abhängig von der Diagnose-Konfigurationsinformation in einer Re-Konfigurationseinheit (23, 33), Ändern (S5) einer initialen Arbeits-Konfigurationsinformation zur Bereitstellung von Diagnosedaten entsprechend der Diagnose-Konfigurationsinformation für jede Arbeits-Containerinstanz, für die ein Re-Konfigurationsbedarf ermittelt wurde,
in der Laufzeitumgebung (32) oder in der Orchestrierungseinrichtung (20),
- erneut Starten (S6) der geänderten Arbeits-Containerinstanzen entsprechend der geänderten Arbeits-Konfigurationsinformation, und Starten (S7) der mindestens einen Diagnose-Containerinstanz einer Diagnose-Applikation entsprechend der Diagnose-Konfigurationsinformation.

## Beschreibung

Die Erfindung betrifft ein Verfahren, ein System und ein Computer-Programmprodukt zur automatischen Zuweisung geänderter Berechtigungen zu Diagnosezwecken für bereits gestartete Arbeits-Containerinstanzen, die eine vorbestimmte durch Container implementierte Anwendung auf einem Gerät bereitstellen.

Container-Virtualisierung ist eine Virtualisierungsmethode auf Betriebssystemebene. Dabei wird Computerprogrammen eine komplette Laufzeitumgebung virtuell innerhalb eines geschlossenen Software-Containers zur Verfügung gestellt. Die Laufzeitumgebung kann von einer Vielzahl von Containern genutzt werden und greift auf einen Betriebssystemkern eines Gastrechners zu. Software-Container, im Weiteren kurz Container genannt, stellen somit gegenüber Virtuellen Maschinen, die über ein eigenes Betriebssystem verfügen und mit Hilfe eines Hypervisors Hardwareressourcen des darunterliegenden Systems zugewiesen bekommen und über einen eigenen Betriebssystemkern verfügen, eine ressourcenschonende Art der Virtualisierung dar und kapseln eine in einem Container betriebene Software-Anwendung vom darunterliegenden Gastrechner ab. Software-Anwendungen werden mittlerweile in vielen Bereichen durch den Einsatz von Container-Technologie implementiert, beispielsweise in der Industrieautomation und der Prozesssteuerung, aber auch in Transportsystemen oder der Gebäudeautomatisierung.

Um einen Container auf dem Gastrechner starten zu können, wird ein Containerimage benötigt, welches neben der Anwendungssoftware auch die für die Anwendungssoftware erforderlichen Binärprogramme und Bibliotheken enthält. Aus dem Containerimage wird mit Hilfe einer Deployment-Information auf dem Gastrechner ein Container, genauer eine Containerinstanz, erstellt und auf der Laufzeitumgebung des Gastrechners ausgeführt.

Eine orchestrierte Laufzeitumgebung umfasst einen Orchestrierer und mindestens ein Gastrechner, meist eine Vielzahl von Gastrechnern, auch als Knoten bezeichnet, die dem Orchestrierer zugeordnet sind. Der Orchestrierer startet, verwaltet und beendet Containerinstanzen auf den zugeordneten Gastrechnern. Typische orchestrierte Laufzeitumgebungen sind hierbei Kubernetes-basierte Containerumgebungen, die beispielsweise Cloudbasierte Container-as-a-Services-Umgebungen oder in einer Cloud betriebene virtuelle Instanzen als Knoten einer orchestrierten Laufzeitumgebung verwalten.

Bei containerisierten Laufzeitumgebungen ist es üblich, dass bestimmte höherprivilegierte Containerinstanzen andere Containerinstanzen überwachen oder aufgrund eines vordefinierten Regelwerkes einschränken. Damit eine für die Überwachung bestimmte Containerinstanz diese Einschränkungen oder Überwachung auch durchführen kann, sind solche Instanzen in vielen Fällen mit höheren Prozessprivilegien ausgestattet. Hierdurch ist sichergestellt, dass diese auf die anderen Instanzen oder das darunterliegende System zugreifen zu können. Neben einer Verwendung von orchestrierten Laufzeitumgebungen im IT-Umfeld werden diese auch im industriellen Internet of Things (IoT)-Umfeld eingesetzt. Im industriellen Umfeld sind Diagnose-Applikationen bekannt, die aus mehreren dieser höherprivilegierten Containerinstanzen zu Überwachungsaufgaben bestehen.

Um Überwachungstätigkeiten durchführen zu können, ist es jedoch in manchen Fällen nicht ausreichend, dass ausschließlich Instanzen der Diagnose-Applikation mit höheren Privilegien ausgestattet werden, sondern zusätzlich auch eine Laufzeitkonfiguration der zu überwachenden Workload-Instanzen zur Erbringung der Diagnosetätigkeit angepasst werden muss.

Es ist somit eine Aufgabe der vorliegenden Erfindung, ein Verfahren zu schaffen, welches die Konfiguration von Workload-Instanzen dynamisch und individuell verändert und somit die Durchführung von Diagnosetätigkeiten ermöglicht.

Die Aufgabe wird durch die in den unabhängigen Ansprüchen beschriebenen Maßnahmen gelöst. In den Unteransprüchen sind vorteilhafte Weiterbildungen der Erfindung dargestellt.

Gemäß einem ersten Aspekt betrifft die Erfindung ein Verfahren zur automatischen Zuweisung geänderter Berechtigungen zu Diagnosezwecken für bereits gestartete Arbeits-Containerinstanzen, die mindestens eine durch Container implementierte Anwendung auf einem Gerät bereitstellen, umfassend die Schritte ausgeführt auf einer Laufzeitumgebung des Geräts oder in einer Orchestrierungseinrichtung, die die Bereitstellung der Anwendung durch Container steuert:
- Empfangen einer Konfigurationsinformation zum Starten einer Containerinstanz,
- Identifizieren einer Diagnose-Konfigurationsinformation zur Bereitstellung von mindestens einer Diagnose-Containerinstanz einer Diagnose-Applikation, der Diagnosetätigkeiten in Bezug auf den mindestens eine Arbeits-Containerinstanz der Anwendung ausführt,
- Abrufen bestehender Arbeits-Containerinstanzen, die die Anwendung ausführen, von einer Klassifizierungsdatenbank,
- Ermitteln eines Re-Konfigurationsbedarfs der abgerufenen Arbeits-Containerinstanzen abhängig von der Diagnose-Konfigurationsinformation in einer Re-Konfigurationseinheit,
- Ändern einer initialen Arbeits-Konfigurationsinformation zur Bereitstellung von Diagnosedaten entsprechend der Diagnose-Konfigurationsinformation für jede Arbeits-Containerinstanz, für die ein Re-Konfigurationsbedarf ermittelt wurde,
- erneut Starten der geänderten Arbeits-Containerinstanzen entsprechend der geänderten Arbeits-Konfigurationsinformation, und
- Starten der mindestens einen Diagnose-Containerinstanz einer Diagnose-Applikation entsprechend der Diagnose-Konfigurationsinformation.

Somit ist es möglich bereits gestartete Arbeits-Containerinstanzen auch während ihrer Laufzeit umzukonfigurieren und somit der Diagnose durch die neu gestartete Diagnose-Applikation zugänglich zu machen. Durch die Klassifizierungsdatenbank können effizient bezüglich Prozesskapazität alle umzukonfigurierenden Arbeits-Containerinstanzen zentral ermittelt und abgerufen werden ohne die Laufzeitumgebung bzw. die Orchestrierungseinrichtung selbst abfragen und damit belasten zu müssen. Es kann somit überprüft werden, welche Container-Instanzen rekonfiguriert werden müssen und welche nicht. In der Re-Konfigurationseinheit werden die Funktionen zum Ermitteln der Konfigurationsänderungen gebündelt. Durch die Implementierung der Re-Konfigurationseinheit in der Laufzeitumgebung oder der Orchestrierungseinrichtung können die Konfigurationsänderungen ohne Weiterleitung an andere Einheiten in der Laufzeitumgebung bzw. Orchestrierungseinrichtung umgesetzt werden.

In einer vorteilhaften Ausführungsform werden die geänderte Arbeits-Konfigurationsinformation und die Diagnose-Konfigurationsinformation in der Klassifizierungsdatenbank abgespeichert. Optional wird in der Klassifizierungsdatenbank zusätzlich die Diagnose-Applikation, welche die Änderungen erzeugt, für die jeweilige Instanz erfasst.

Somit wird die Klassifizierungsdatenbank automatisch und zeitnah aktualisiert. Soll eine weitere Diagnose-Applikation gestartet werden, so können für die Ermittlung des Re-Konfigurationsbedarfs die Konfigurationsänderungen aufgrund der ersten Diagnose-Applikation in der Arbeits-Konfigurationsinformation mitberücksichtigt werden. Optional wird in der Klassifizierungsdatenbank erfasst, welche Diagnose-Applikation welche Änderungen in einer Container-Instanz erzeugt, sodass hierbei direkt Konflikte mit Re-Konfigurationsanforderungen anderer Diagnose-Applikationen erkannt werden können.

In einer vorteilhaften Ausführungsform umfasst die Arbeits-Konfigurationsinformation des mindestens einen Arbeitscontainers, für den Re-Konfigurationsbedarf ermittelt wurde, Diagnose-spezifische Marken mit veränderten Parametern, und die veränderten Parameter werden dann in der Arbeits-Konfigurationsinformation aktiviert, wenn die spezifische Diagnose-Konfigurationsinformation identifiziert wird. Alternativ oder zusätzlich umfasst die Diagnose-Konfigurationsinformation Arbeitscontainer-spezifische Marken mit veränderten Parametern, die dann in der Arbeits-Konfigurationsinformation des spezifische Arbeitscontainer aktiviert werden, wenn die Diagnose-Konfigurationsinformation identifiziert wird.

Die in den Diagnose-spezifischen bzw. Arbeitscontainerspezifischen Marken angeordneten Parameter führen, wenn sie in der Konfigurations-information aktiviert sind, zu den Eigenschaften zur Bereitstellung von Diagnosedaten. Somit können die Änderungen vordefiniert und effizient ohne separate Konfigurationsanweisungen in den Arbeits-Konfigurationsinformation aktiviert werden. Des Weiteren können dadurch die Diagnose-Applikations-spezifischen Eigenschaften bzw. Arbeitscontainer-spezifische Anpassungen effizient eingebracht werden.

In einer vorteilhaften Ausführungsform umfasst das Ändern der Arbeits-Konfigurationsinformationen zur Bereitstellung von Diagnosedaten mindestens einen der folgenden Parameter: ein Prozessprivileg, eine Netzwerkkonfiguration, eine Speicherkonfiguration oder einen Linux-Namensraum, in dem der ermittelte Arbeitscontainer ausgeführt wird.

Somit können bestimmte Diagnose-spezifische Funktionen neu in die Arbeits-Containerinstanz eingebracht werden. Beispielsweise können zusätzliche Anwendungsparameter durch eine neu implementierte Zugriffsberechtigung auf einen vorher unzugänglichen Speicherbereich und eine erweiterte Netzwerkkonfiguration von der Arbeits-Containerinstanz ausgelesen und der Diagnose-Containerinstanz übergeben werden.

In einer vorteilhaften Ausführungsform wird die Diagnose-Konfigurationsinformation identifiziert aufgrund einer vorbestimmten Eigenschaft, die in der Diagnose-Konfigurationsinformation enthalten ist. Alternativ wird die Diagnose-Konfigurationsinformation aufgrund einer vorbestimmten Eigenschaft, die außerhalb der Diagnose-Konfigurationsinformation an die Laufzeitumgebung des Geräts übergeben wird, identifiziert. Die Eigenschaft ist dabei eindeutig der Diagnose-Konfigurationsinformation zugeordnet.

Somit können flexibel verschiedene Eigenschaften in der Diagnose-Konfigurationsinformation zur Kennzeichnung der Diagnose-Konfiguration verwendet werden und implizit mit der Diagnose-Konfigurationsinformation transportiert werden. Dies reduziert den Übertragungsaufwand und reduziert die Fehleranfälligkeit durch eine externe Zuordnung. Bei einer Übergabe der Eigenschaften außerhalb der Diagnose-Konfigurationsinformation, bspw. durch eine der Diagnose-Konfigurationsinformation zugeordnete Metainformation können Eigenschaften, die ursprünglich nicht zur Erkennung der Diagnose-Konfigurationsinformation vorgesehen werden im Nachhinein zugewiesen werden.

In einer vorteilhaften Ausführungsform sind die die Arbeits-Konfigurationsinformation und/oder eine in der Arbeits-Konfigurationsinformation referenzierte Arbeits-Containerinstanz mit einem digitalen Signaturverfahren integritätsgesichert sind.

Damit kann verhindert werden, dass die Arbeits-Konfigurationsinformation derart verändert wird, dass sie von einem Benutzer als Diagnose-Applikation klassifiziert wird, beispielsweise indem die Eigenschaft zur Erkennung als Diagnose-Applikation eingefügt wird.

In einer vorteilhaften Ausführungsform werden diejenigen Eigenschaften, die zur Identifizierung der Diagnose-Konfigurationsinformation oder einer in der Diagnose-Konfigurationsinformation referenzierten Diagnose-Containerinstanz, erforderlich sind in einer Klassifizierungsrichtlinie spezifiziert und in der Re-Konfigurationseinheit bereitgestellt.

Somit können die Eigenschaften gesammelt bereitgestellt und flexibel ausgetauscht werden.

In einer vorteilhaften Ausführungsform enthält die Klassifizierungsdatenbank für jede bereits gestartete Arbeits-Containerinstanz einen aktuellen Laufzeitmodus, der angibt, ob die Arbeitscontainer-Instanz in einem Standardmodus entsprechend der initialen Arbeits-Konfigurationsinformation oder in einem Diagnosemodus entsprechend der geänderten Arbeits-Konfigurationsinformation vorliegt, sowie eine Referenz auf die aktuell gestartete Arbeits-Konfigurationsinformation enthält. Optional enthält die Klassifizierungsdatenbank für bereits gestartete Arbeits-Containerinstanz die Information welche Diagnose-Applikation die Änderung für eine Container-Instanz hervorruft und welche Änderungen (z.B. durch Erfassung des Kennzeichens) angewandt wurden.

In einer vorteilhaften Ausführungsform ist in der Re-Konfigurationseinheit ein Priorisierungsattribut zur Arbeits-Konfigurationsinformation enthalten, das angibt, ob eine weitere neu zu startende Arbeits-Containerinstanz bevorzugt entsprechend der geänderten oder der initialen Arbeits-Konfigurationsinformation gestartet wird.

Somit können beim Nachstarten weiterer Arbeits-Containerinstanzen die derzeit aktuelle Version, d.h., mit oder ohne Diagnosefunktionen, entsprechend den laufenden Diagnose-Applikationen gestartet werden. Ein nachträgliche mit Zeit und Rechenkapazität verbundenes Umkonfigurieren wird somit vermieden.

In einer vorteilhaften Ausführungsform wird eine Konflikterkennung auf den geänderten Arbeits-Konfigurationsinformationen in der Re-Konfigurationseinheit beim Ermitteln des Re-Konfigurationsbedarfs durchgeführt, wenn eine zweite oder weitere Diagnose-Konfigurationsinformation identifiziert wird.

Somit kann nach dem Erkennen einer Diagnose-Konfigurationsinformation gegenläufige, sich blockierende Parameter bzw. Konfigurationsdetails in der Arbeits-Konfigurationsinformation erkannt und Maßnahmen zur Konfliktlösung getroffen werden. Konflikte können insbesondere dann auftreten, wenn die Arbeits-Konfigurationsinformation bereits für eine erste bereits gestarteten Diagnose-Applikation verändert wurde.

In einer vorteilhaften Ausführungsform wird, wenn eine weitere Arbeits-Containerinstanz einer weiteren Anwendung zum Starten auf der Laufzeit empfangen wird, ein Re-Konfigurationsbedarf für die weitere Arbeits-Containerinstanz abhängig von der Diagnose-Konfigurationsinformation ermittelt und eine Konflikterkennung auf der weiteren zu startenden Arbeits-Konfigurationsinformation durchgeführt.

Somit werden weitere Arbeits-Containerinstanzen einer neu zu startenden weiteren Anwendung vor dem Start bereits an eine vorhandener Diagnoseanwendung angepasst. Dadurch wird eine Anpassung oder Konflikte nach dem Start der weiteren Anwendung, die zu Verzögerungen in der Ausführung der weiteren Anwendung führen könnten, vermieden.

In einer vorteilhaften Ausführungsform wird beim Empfang einer Löschanforderung für die Diagnose-Applikation, ein Re-Konfigurationsbedarf in den geänderte Arbeits-Konfigurationsinformationen ermittelt durchgeführt. Beispielsweises wird dies durchgeführt, indem in der Klassifizierungsdatenbank überprüft wird, ob die zu löschende Diagnose-Applikation für die jeweilige Instanz eingetragen ist und ob noch weitere Diagnose-Applikationen die gleiche Änderung aufgrund ihrer Applikation angefordert haben.

Somit können die Diagnose-spezifischen in der Arbeits-Konfigurationsinformation wieder rückgängig gemacht werden bzw. der Eintrag der geänderten Arbeitsbereitstellungsinformation in der Klassifizierungsdatenbank gelöscht werden. Somit wird die Klassifizierungsdatenbank automatisch aktualisiert.

Gemäß einem zweiten Aspekt betrifft die Erfindung ein System zur automatischen Zuweisung geänderter Berechtigungen zu Diagnosezwecken für bereits gestartete Arbeitscontainerinstanzen, die eine durch Container implementierte Anwendung auf einem Gerät bereitstellen, umfassend eine Laufzeitumgebung auf dem Gerät oder eine Orchestrierungseinrichtung, die die Bereitstellung der Anwendung durch Container steuert und eine Klassifizierungsdatenbank, die derart ausgebildet sind die Schritte des vorher beschriebene Verfahrens durchzuführen.

Gemäß einem dritten Aspekt betrifft die Erfindung ein Computerprogrammprodukt, umfassend ein nicht flüchtiges computerlesbares Medium, das direkt in einen Speicher eines digitalen Computers ladbar ist, umfassend Programmcodeteile, die bei Ausführung der Programmcodeteile durch den digitalen Computer diesen veranlassen, die Schritte des Verfahrens durchzuführen.

Sofern es in der nachfolgenden Beschreibung nicht anders angegeben ist, beziehen sich die Begriffe "starten", "empfangen", "identifizieren", "ermitteln", "ändern" und dergleichen, vorzugsweise auf Handlungen und/oder Prozesse und/oder Verarbeitungsschritte, die Daten verändern und/oder erzeugen und/oder die Daten in andere Daten überführen, wobei die Daten insbesondere als physikalische Größen dargestellt werden oder vorliegen können, beispielsweise als elektrische Impulse.

Das System und darin optional enthaltene Komponenten, wie beispielsweise das Gerät, die Orchestrierungseinrichtung, die Klassifizierungsdatenbank und dergleichen kann bzw. können einen oder mehrere Prozessoren, umfassen. Bei einem Prozessor kann es sich insbesondere um einen Hauptprozessor (engl. Central Processing Unit, CPU), einen Mikroprozessor oder einen Mikrokontroller, beispielsweise eine anwendungsspezifische integrierte Schaltung oder einen digitalen Signalprozessor, möglicherweise in Kombination mit einer Speichereinheit zum Speichern von Programmbefehlen, etc. handeln.

Ein Computerprogrammprodukt, wie z. B. ein Computerprogrammmittel, kann beispielsweise als Speichermedium, wie zum Beispiel einer Speicherkarte, USB-Stick, CD-ROM, DVD oder auch in Form einer herunterladbaren Datei von einem Server in einem Netzwerk bereitgestellt oder geliefert werden.

Ausführungsbeispiele des erfindungsgemäßen Verfahrens und der erfindungsgemäßen Vorrichtung sind in den Zeichnungen beispielhaft dargestellt und werden anhand der nachfolgenden Beschreibung näher erläutert. Es zeigen:
- Fig. 1: eine Ausführungsbeispiel eines erfindungsgemäßen Systems in schematischer Darstellung;
- Fig. 2: eine Ausführungsbeispiel eines Eintrags in einer erfindungsgemäßen Klassifizierungsdatenbank in schematischer Darstellung;
- Fig. 3: ein Ausführungsbeispiel des erfindungsgemäßen Verfahrens als Ablaufdiagramm;
- Fig. 4: ein Ausführungsbeispiel des erfindungsgemäßen Verfahrens beim Start einer Arbeits-Containerinstanz einer Anwendung bei bestehender Diagnose-Applikation als Ablaufdiagramm; und
- Fig. 5: eine Ausführungsbeispiel des erfindungsgemäßen Verfahrens beim Löschen einer bestehenden Diagnose-Applikation als Ablaufdiagramm.

Einander entsprechende Teile sind in allen Figuren mit den gleichen Bezugszeichen versehen.

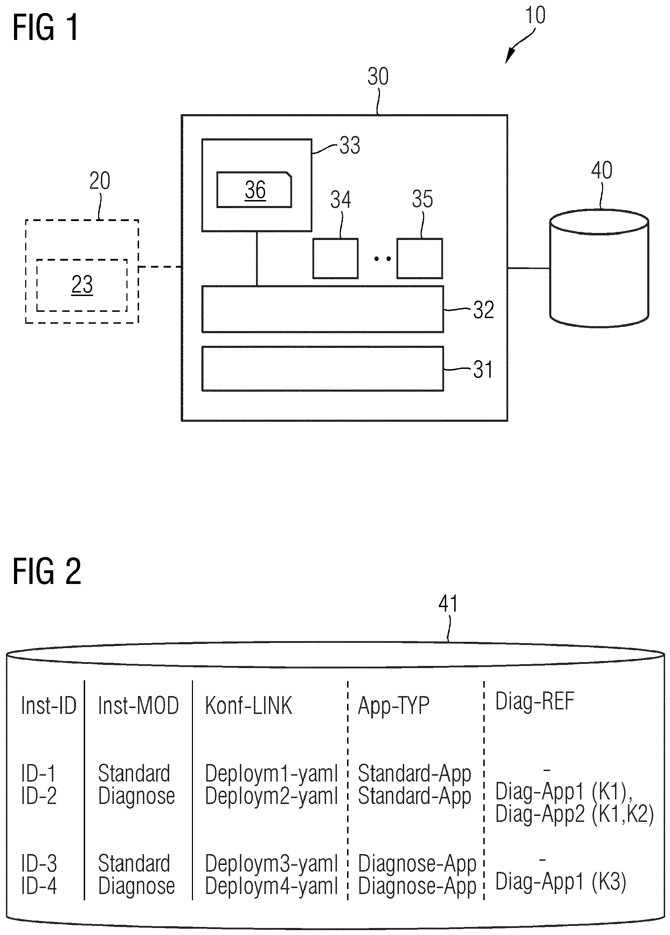

Fig.1 zeigt ein Ausführungsbeispiel eines erfindungsgemäßen Systems 10. Eine Anwendung wird mittels einem Arbeitscontainer oder von mehreren unterschiedlichen Arbeitscontainern, die unterschiedliche Teile der Anwendung bereitstellen auf einem Gerät 30, beispielsweise einem Internet der Dinge (I-oT)-Gerät rausgeführt. Eine Arbeits-Containerinstanz 34 wird anhand von Arbeits-Konfigurationsinformation aus einem Arbeitscontainerimages auf einer Container-Laufzeitumgebung 32, im Weiteren kurz Laufzeitumgebung genannt, konfiguriert und gestartet. Die Laufzeitumgebung 32 greift auf einen Betriebssystemkern 31 eines Geräts 30 zu. In einem orchestrierten Umfeld startet und verwaltet eine Orchestrierungseinrichtung 20 Containerinstanzen einer Anwendung, die auf einem oder auch auf mehreren Geräten ausgeführt werden. Da die Orchestrierungseinrichtung 20 lediglich in einem orchestrierten Umfeld und nicht in einem durch die Laufzeitumgebung 32 verwalteten Umfeld zum Einsatz kommt, ist sie in Fig. 1 gestrichelt dargestellt.

Um die Arbeits-Containerinstanzen 34 und somit auch die Anwendung, überwachen zu können, wird eine oder auch mehrere Diagnoseanwendung auf der Laufzeitumgebung 32 des Geräts 30 gestartet. Die Diagnoseanwendung wird mittels Diagnose-Containerinstanzen 35 bereitgestellt, die Eigenschaften, wie beispielsweise höhere Privilegien, aufweisen, die es ihnen ermöglichen Diagnosetätigkeiten in Bezug auf die Arbeits-Containerinstanzen 34 durchzuführen. Die Diagnose-Containerinstanz wird mittels einer Diagnose-Konfigurationsinformation konfiguriert.

Um diese Diagnosetätigkeiten durchführen zu können, ist es in manchen Fällen nicht ausreichend, dass ausschließlich Diagnose-Containerinstanzen 34 mit Eigenschaften zur Überwachung ausgestattet werden. Es ist zusätzlich notwendig auch die Laufzeitkonfiguration der Arbeits-Containerinstanzen 35 zur Erbringung der Diagnosetätigkeit anzupassen. Durch die Konfiguration einzelner Arbeits-Containerinstanzen 34 kann beispielsweise ein Loglevel der innerhalb der Instanz betrieben Anwendung erhöht werden, wodurch Applikationslogs detaillierter, beispielsweise für mehrere unterschiedliche Ereignisse erfasst werden oder Daten über eine Diagnoseschnittstelle der Diagnose-Applikation umgeleitet werden, damit entsprechende Auswertungen durchgeführt werden können. Ein weiteres Beispiel ist eine Einbindung der für die Diagnose erforderlichen Module innerhalb der Arbeits-Containerinstanz, welche veränderte Prozessprivilegien erfordern.

Der grundlegende Gedanke der Erfindung besteht darin, dass die Orchestrierungseinrichtung 20 oder die Container-Laufzeitumgebung 32 beim Starten einer als Diagnose-Applikation kategorisierten Anwendung einzelne auf dem Gerät 30 betriebene Arbeits-Containerinstanzen 34 individuell umkonfiguriert, indem die zugehörige Arbeits-Konfigurationsinformation individuell zur Durchführung der Diagnosetätigkeiten angepasst wird.

Die Laufzeitumgebung 32 sowie im orchestrierten Fall der Orchestrierungseinrichtung 20 wird als vertrauenswürdig angenommen. In der orchestrierten Umgebung arbeitet eine Re-Konfigurationseinheit 23 mit der Orchestrierungseinrichtung zusammen, in einer nicht-orchestrierten Umgebung arbeitet eine Re-Konfigurationseinrichtung 33 mit der Laufzeitumgebung 32 zusammen. Die Re-Konfigurationseinheit 23, 33 kann in die Orchestrierungseinrichtung 20 bzw. in die Laufzeitumgebung 33 integriert, bspw. als Plugin, ausgebildet sein, aber auch als eigenständiges Programm ausgeprägt sein, welches mit der Orchestrierungseinrichtung 20 bzw. der Container-Laufzeitumgebung 32 kommuniziert. Die Re-Konfigurationseinheit 23, 33 ist nur einmal ausgeprägt und arbeitet somit entweder mit der Orchestrierungseinrichtung 20 oder mit der Laufzeitumgebung 32 zusammen.

Die Re-Konfigurationseinheit 23, 33 ist derart ausgebildet, Diagnose-Konfigurationsinformation der Diagnose-Applikation zu identifizieren. Des Weiteren ist Re-Konfigurationseinheit 23, 33 derart ausgebildet, die Arbeits-Containerinstanzen 34, die die Anwendung ausführen bei einer Klassifizierungsdatenbank 40 abzurufen, einen Re-Konfigurationsbedarf, d.h. Diagnose-spezifischen Anpassungen, für die Arbeits-Containerinstanzen 34 zu identifizieren und an die Laufzeitumgebung 32 bzw. die Orchestrierungseinrichtung 20 zur Durchführung der Änderungen zurückgegeben. Die Orchestrierungseinrichtung 20 bzw. die Laufzeitumgebung 32 ist derart ausgebildet eine geänderten Arbeits-Konfigurationsinformation zu erstellen und geänderte Arbeitscontainer entsprechend der geänderten Arbeits-Konfigurationsinformation neu zu starten. Anschließend startet die Orchestrierungseinrichtung 20 bzw. die Laufzeitumgebung 32 die mindestens eine Diagnose-Containerinstanz.

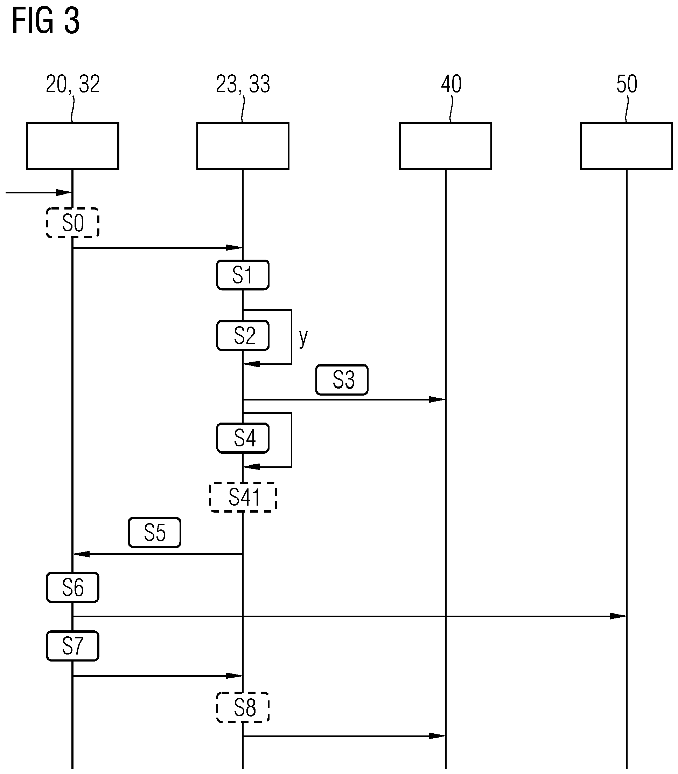

Anhand von Fig. 3 wird der Ablauf des vorgeschlagen Verfahren zwischen der Orchestrierungseinrichtung 20 bzw. der Laufzeitumgebung 32, der Re-Konfigurationseinheit 23, 33, der Klassifizierungsdatenbank 40 sowie einer Arbeits-Containerinstanz 50 näher erläutert.

Nach einer Übergabe einer Konfigurationsinformation zum Starten einer Containerinstanz, siehe S0, an die Orchestrierungseinrichtung 20 bzw. die Laufzeitumgebung 32 wird diese weitergeleitet und in der Re-Konfigurationseinheit 23, 33 empfangen, siehe S1. Die Re-Konfigurationseinheit 23, 33 prüft, ob es sich bei der Konfigurationsinformation um eine Diagnose-Konfigurationsinformation handelt, also eine Diagnose-Containerinstanz gestartet werden soll oder eine in der Konfigurationsinformation referenzierte Containerinstanz Bestandteil einer Diagnose-Applikation ist, siehe S2.

Die Diagnose-Konfigurationsinformation wird identifiziert aufgrund einer vorbestimmten Eigenschaft, die in der Diagnose-Konfigurationsinformation selbst enthalten ist, oder au-βerhalb der Diagnose-Konfigurationsinformation an die Laufzeitumgebung 32 des Geräts 30 oder die Orchestrierungseinrichtung 20 übergeben wird.

Eine solche Eigenschaft ist beispielsweise ein erlaubter Zugriff auf bestimmte Ressourcen des Geräts 30, beispielsweise ein erlaubter Zugriff auf eine Socket-Schnittstelle der Laufzeitumgebung 33. Eine Eigenschaft ist beispielsweise auch ein bestimmtes Prozess-Privileg oder bestimmte Diagnose-spezifische-Marken, bestimmte Arbeitscontainer-spezifische-Marken, bestimmte Bereitstellungs-Signaturen oder bestimmte Image-Signaturen, eine Installation innerhalb eines bestimmten Mandanten, beispielsweise einem Kubernetes-Namesraum, die in der Diagnose-Konfigurationsinformation enthalten sind.

Solche Marken sind beispielsweise Labels, die zusätzliche beispielsweise vorgegeben Diagnose-spezifische oder Arbeitscontainer-spezifische Information enthalten. Wird eine solche vorgegebene Marke in der Konfigurationsinformation erkannt, wird die Konfigurationsinformation als einen Diagnose-Konfigurationsinformation klassifiziert.

Ein Namensraum ist eine Isolationsmethode in der Container-Virtualisierung bspw. für Prozesse in einem Linux Betriebssystemkern. Prozesse außerhalb eines zugewiesenen Namensraums sind nicht sichtbar. Diese Namensräume, auch name spaces genannt, können für eine Interprozesskommunikation (ipc), für das Einhängen von Dateisystemen (mount), für Prozesskennungen (pid) oder auch Netzwerke und Nutzer verwendet werden.

Einfach ausgedrückt: wenn man sich mit einem bestimmten Namespace eines anderen Containers verbindet, kann man in diesen Container hineinschauen und Operationen ausführen.

Die Bereitstellungs-Signatur ist eine mit einer Signaturfunktion bspw. einer Hashfunktion, bevorzugt unter Verwendung eines kryptographischen Schlüssels, erstellte Kennung über eine bestimmte Diagnose-Konfigurationsinformation. Eine Image-Signatur wird in gleicher Weise über eine Kodierung eines Containerimages erstellt. Werden die Signaturen außerhalb der Konfigurationsinformation oder außerhalb eines Containerimages bereitgestellt, kann die Orchestrierungseinrichtung 20 bzw. die Laufzeitumgebung 32 diese zusätzlich zur Konfigurationsinformation an die Re-Konfigurationseinheit 23,33 übergeben.

Es ist auch eine beliebige Kombination der oben genannten Eigenschaften möglich. Die erforderlichen Eigenschaften zur Klassifizierung der Konfigurationsinformation und/oder einzelner Containerinstanzen als Diagnose-Konfigurationsinformation oder Arbeits-Konfigurationsinformation, sind in einer Klassifizierungsrichtlinie spezifiziert und in der Re-Konfigurationseinheit 23, 33 bereitgestellt.

Um zu verhindern, dass beliebige Anwendungen von einem Benutzer als Diagnose-Applikationen klassifiziert werden können, wird in einer Variante vorgeschlagen, dass sowohl die Arbeits-Konfigurationsinformation und/oder eine in der Arbeits-Konfigurationsinformation referenzierte Arbeits-Containerinstanz oder auch die referenzierten Container mit Hilfe bekannter Signaturverfahren integritätsgesichert werden.

Wurde die Konfigurationsinformation als Diagnose-Konfigurationsinformation identifiziert, siehe die Kennzeichnung y bei Schritt S2, werden alle Einträge zu bestehenden Arbeits-Containerinstanzen von der Klassifizierungsdatenbank 50 abgerufen S3. Insbesondere werden für die Arbeits-Containerinstanzen die Links zur Konfigurationsinformation Inst-LINK an die Re-Konfigurationseinheit 23, 33 übermittelt. Werden bereits Diagnose-Containerinstanzen auf der Laufzeitumgebung 32 des Geräts 30 ausgeführt, werden diese wie Arbeits-Containerinstanzen behandelt und ebenfalls von der Klassifizierungsdatenbank 50 abgerufen.

In Fig. 2 ist eine Klassifizierungsdatenbank 41 mit beispielhaften Einträgen für laufende Arbeits-Containerinstanzen dargestellt. Die Klassifizierungsdatenbank 41 umfasst einen Eintrag für jede bereits gestartete Arbeits- als auch Diagnose-Containerinstanz eine Instanzkennung Inst-ID, einen aktuellen Laufzeitmodus Inst-MOD, der angibt, ob die Arbeits- bzw. Diagnosecontainer-Instanz in einem Standardmodus entsprechend der initialen Arbeits- bzw. Diagnose-Konfigurationsinformation oder in einem Diagnosemodus entsprechend der geänderten Arbeits- bzw. Diagnose-Konfigurationsinformation vorliegt, sowie eine Referenz (einen Link) auf die aktuell gestartete Arbeits- bzw. Diagnose-Konfigurationsinformation Konf-LINK.

Geänderte Diagnose-Konfigurationsinformation wird generiert, wenn auf Grund einer weiteren gestarteten Diagnose-Applikation ein Re-Konfigurationsbedarf bei der Diagnose-Containerinstanz bzw. deren Diagnose-Konfigurationsinformation ermittelt und durchgeführt wird. Optional umfasst der Eintrag einen Klassifizierungstyp App-TYP, der angibt, ob es sich um einen Diagnose-Containerinstanz oder eine Arbeits-Containerinstanz handelt. Optional umfasst der Eintrag eine Diagnose-Applikationsreferenz Diag-REF, der für jede Diagnose-Applikation, die eine Änderung in der Container-Instanz umgesetzt hat, den Namen der Diagnose-Applikation sowie die angewandten Kennzeichen für die Rekonfiguration einer Container-Instanz angibt.

Anschließend wird in der Re-Konfigurationseinheit 23, 33 ein Re-Konfigurationsbedarf der abgerufenen Arbeits-Containerinstanzen abhängig von der Diagnose-Konfigurationsinformation ermittelt, siehe Schritt S4.

Die für die Diagnose-Applikation erforderlichen Konfigurationsänderungen können entsprechend zwei Varianten spezifiziert werden. Die beiden Varianten können miteinander kombiniert werden.

Gemäß der ersten Variante spezifiziert die Diagnose-App selbst die Änderungen für die auf der Laufzeitumgebung 33 betriebenen Arbeits-Containerinstanzen. Die Diagnose-Konfigurationsinformation spezifiziert Änderungsoperationen für vordefinierte Arbeitscontainer-spezifische Marken, Signaturen oder sonstige referenzierte Konfigurationseinstellungen.

Gemäß der zweiten Variante sind innerhalb der Arbeits-Konfigurationsinformation zusätzliche Diagnose-Bereitstellungsinformationen, beispielsweise Arbeitscontainer-spezifische Marken mit geänderten Parametern hinterlegt, welche die Standard-Einstellungen "überschreiben", und somit aus der initialen Arbeits-Konfigurationsinformation die geänderte Arbeits-Konfigurationsinformation generieren. Hierbei können auch Referenzen auf andere Diagnose-Apps mit Hilfe von Signaturen, Labels, auch als Marken bezeichnet, Image- oder Deployment-Namen, Tags o.ä. referenziert werden, sodass gegebenenfalls die Arbeits-Containerinstanz für mehrere Diagnose-Applikationen unterschiedlich konfiguriert werden kann.

Der Re-Konfigurationsbedarf wird ermittelt, indem die Re-Konfigurationseinheit 23, 33 die ermittelten Arbeits-Konfigurationsinformation hinsichtlich der in der Diagnose-Konfigurationsinformation vordefinierte Arbeitscontainer-spezifische Marken, Signaturen oder sonstige referenzierte Konfigurationseinstellungen überprüft und falls diese in der Arbeits-Konfigurationsinformation enthalten sind, wird eine entsprechende geänderte Arbeits-Konfigurationsinformation erstellt, siehe S5. In gleicher Weise überprüft die Re-Konfigurationseinheit 23,33 die initialen Arbeits-Konfigurationsinformation auf zusätzliche Diagnose-Bereitstellungsinformationen und aktiviert dies, d.h. erstellt eine entsprechende geänderte Arbeitskonfigurationsinformation, siehe S5.

Änderungen der Arbeits-Konfigurationsinformationen zur Bereitstellung von Diagnosedaten umfassen mindestens einen der folgenden Parameter: ein Prozessprivileg, eine Netzwerkkonfiguration, eine Speicherkonfiguration oder einen (Unix)Namensraum, in dem der ermittelte Arbeitscontainer ausgeführt wird. Eine Änderung der Speicherkonfiguration kann beispielsweise sein, ein Volume, d.h., Speicherbereiche, die bspw. als RAM, flüchtigen Speicher und als auch persistenten Speicher ausgebildet sind zu entfernen oder umzukonfigurieren.

Umfasst die Arbeits-Konfigurationsinformation des mindestens einen Arbeitscontainers, für den Re-Konfigurationsbedarf ermittelt wurde, Diagnose-spezifische Marken mit veränderten Parametern, werden die veränderten Parameter dann in der Arbeits-Konfigurationsinformation aktiviert, wenn die spezifische Diagnose-Konfigurationsinformation identifiziert wurde. Umfasst
die Diagnose-Konfigurationsinformation Arbeitscontainer-spezifische Marken mit veränderten Parametern, werden die veränderten Parameter dann in der Arbeits-Konfigurationsinformation des spezifische Arbeitscontainer aktiviert, wenn die Diagnose-Konfigurationsinformation identifiziert wird.

Die mindestens eine geänderte Arbeits-Konfigurationsinformation wird von der Re-Konfigurationseinheit 23, 33 an die Laufzeitumgebung 32 bzw. die Orchestrierungseinrichtung 20 übermittelt, siehe Schritt S6. Anschließend werden die Arbeits-Containerinstanzen von der Laufzeitumgebung 32 bzw. der Orchestrierungseinrichtung 20 erzeugt und ein Neustart der Arbeits-Containerinstanz wird entsprechend der geänderten Arbeits-Konfigurationsinformation bei der Laufzeitumgebung 32 angefordert. Die Laufzeitumgebung 32 startet daraufhin erneut die geänderten Arbeits-Containerinstanzen, siehe S6. Des Weiteren wird nun die mindestens eine Diagnose-Containerinstanz einer Diagnose-Applikation entsprechend der Diagnose-Konfigurationsinformation gestartet, siehe S7.

Im initialen Zustand ist die Klassifizierungsdatenbank 40 leer. Die geänderten Arbeits-Containerinstanzen werden durch die Laufzeitumgebung 32 direkt oder durch die Instanz-Re-Konfigurationseinheit 33 innerhalb einer Datenbank oder dem lokalen Dateisystem erzeugt. Die geänderte Arbeits-Konfigurationsinformation und die Diagnose-Konfigurationsinformation werden nun an die Klassifizierungsdatenbank 40 übermittelt und dort abgespeichert, siehe S8.

Wurden in Schritt S4 keine zu ändernden Arbeits-Containerinstanzen identifiziert, wird der Orchestrierungseinrichtung 20 bzw. der Laufzeitumgebung 32 mitgeteilt, dass die in der Diagnose-Konfigurationsinformation verknüpften Arbeits-Containerinstanzen entsprechend der initialen Konfigurationsinformation erzeugt werden können.

Beim Überprüfen der Konfigurationsinformation, siehe S2, kann optional überprüft werden, ob weitere Arbeits-Containerinstanzen im Diagnose-Modus vorliegen, d.h. mit einer geänderten Arbeits-Konfigurationsinformation in der Klassifizierungsdatenbank

In einer in der Re-Konfigurationseinheit 23, 33 enthaltenen Re-Konfigurationsrichtlinie kann spezifiziert werden, welche Art der Arbeitskonfigurationsrichtline vorrangig umgesetzt werden soll. In der Re-Konfigurationsrichtlinie ist dazu ein Priorisierungsattribut zur Arbeits-Konfigurationsinformation enthalten, das angibt, ob eine weitere neu zu startende Arbeits-Container-instanz bevorzugt entsprechend der geänderten oder der initialen Arbeits-Konfigurationsinformation gestartet wird.

Da einzelne Parameter in der Konfigurationsinformation beim Einsatz mehrere Diagnose-Applikationen an unterschiedlichen Orten gegenseitig Konflikte erzeugen können, wird von der Re-Konfigurationseinheit 23, 33 beim Ermitteln des Re-Konfigurationsbedarfs zusätzlich eine Konflikterkennung für einzelne Parameter durchgeführt, siehe S41. Innerhalb der Re-Konfigurationsrichtline kann hierzu zusätzlich beschrieben werden, wie der Konflikt aufzulösen ist. Eine Konfliktlösung kann beispielsweise sein, dass ausschließliche die in der Diagnose-Applikation spezifizierten Änderungen ausgeführt werden, oder eine Vereinigungsmenge mit Vorrang der in der Diagnose-Applikation spezifizierten Parameter zu bilden oder das höchste vorgegebene Privileg zu verwenden. Ist der Konflikt nicht auflösbar, wird eine Fehlermeldung zurückgemeldet, sodass die Laufzeitumgebung 32 bzw. die Orchestrierungseinrichtung 20 die Diagnose-Applikation nicht startet.

Kann ein Konflikt nicht aufgelöst werden, da z.B. zwei Diagnose-Applikationen widersprüchliche Änderungen verlangen, können die Diagnose-Applikationen, aufgrund ihrer Signatur priorisiert werden. Dadurch kann eine bestehende niedrig priorisierte Diagnose-Applikation auf dem System gelöscht werden. Optional wird die niedrig priorisierte Diagnose-Applikation erst nach Bestätigung des Benutzers gelöscht.

Wird innerhalb der geänderten Arbeitskonfigurationsinformationen kein Konflikt festgestellt, wird von der Instanz-Re-Konfigurationseinheit 23, 33 die geänderte Arbeits-Konfigurationsinformation mitsamt der in der darin referenzierten Containerinstanzen an die Orchestrierungseinrichtung 20 bzw. die Laufzeitumgebung 32 zurückgegeben, welche die aktuelle Arbeits-Containerinstanz stoppt und anschließend die Arbeits-Containerinstanz mit den geänderten Parametern neu startet, siehe S7. Anschließend werden die Instanzkennungen Inst-ID und die Diagnose-Applikationsreferenz Diag-REF für jede gestartete Arbeits-Containerinstanz von der Laufzeitumgebung 32, der Orchestrierungseinrichtung 20 oder der Re-Konfigurationseinheit 23, 33 in der Klassifizierungsdatenbank 50 aktualisiert und der Instanzmodus Inst-MOD auf Diagnose-Modus gesetzt.

Umfasst die Anwendung mehrere unterschiedliche Arbeitscontainer und somit unterschiedliche Arbeitskonfigurationsinformationen, wird zunächst von der Re-Konfigurationseinheit 23, 33 eine Konflikterkennung für sämtliche aktiven Arbeits-Containerinstanzen durchgeführt. Da innerhalb der Klassifizierungsdatenbank 50 auch der Status für die jeweilige Arbeits-Containerinstanzen hinterlegt ist, muss lediglich die initiale Arbeits-Konfigurationsinformation persistiert, d.h. in einem nichtflüchtigen Speicher abspeichert werden, so dass sie auch über einen Programmneustart/Geräteneustart hinweg noch unverändert vorhanden sind. Die geänderte Arbeitskonfigurationsinformation, d.h. für den Diagnose-Modus, muss bei der Existenz einer Diagnose-Applikation lediglich zur Laufzeit abgeleitet werden.

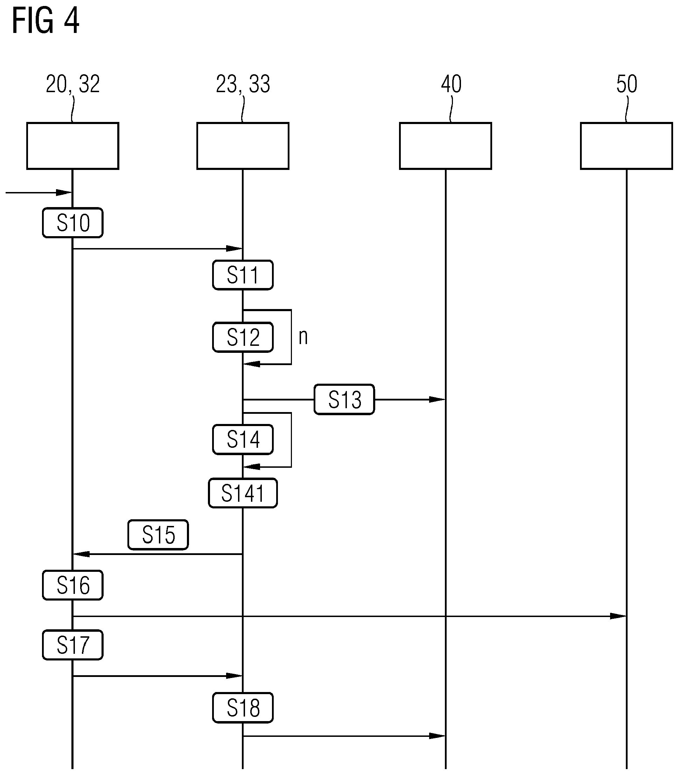

Fig. 4 zeigt das Verfahren beim Starten eines neuen Arbeitscontainer einer neuen Anwendung bei Existenz mindestens einer Diagnose-Applikation. Wie in Fig. 3 ist in Fig.4 der Ablauf in dem System 10 mit Orchestrierungseinrichtung 20 dargestellt.

Eine Konfigurationsinformation des neuen Arbeitscontainers wird an die Laufzeitumgebung 32 bzw. die Orchestrierungseinrichtung 20 übergeben S10 und an die Re-Konfigurationseinheit 23, 33 weitergeleitet. Nach Empfang S11 der neue Konfigurationsinformation in der Re-Konfigurationseinheit 23 überprüft diese, ob es sich um eine Diagnose-Konfigurationsinformation handelt, siehe S12. Nach einer Identifizierung / Klassifizierung der Konfigurationsinformation als Arbeits-Konfigurationsinformation n fragt die Re-Konfigurationseinheit 23, 33 in der Klassifizierungsdatenbank 40 nach, ob weitere Diagnose-Containerinstanzen vorhanden sind, siehe S13, und ermittelt eine Re-Konfigurationsbedarf für die neu zu startenden Arbeits-Containerinstanzen, 14. Dabei wird eine Konflikterkennung S141 für die Konfigurationsanforderungen durchgeführt. Sofern keine nicht-auflösbaren Konflikte existieren, wird eine geänderte neue Arbeits-Konfigurationsinformation erstellt und somit die neu zu installierende Arbeits-Containerinstanz sofort in den Diagnose-Modus versetzt und anschließend und an die Laufzeitumgebung 32 bzw. die Orchestrierungseinrichtung 20 übermittelt, siehe S15. Diese startet daraufhin die Arbeit-Containerinstanz sofort in den Diagnose-Modus, siehe S16 und meldet das erfolgte Ausbringen der geänderten Arbeits-Konfigurationsinformation an die Re-Konfigurationseinheit 23, 33. Diese veranlasst einen neuen Eintrag der erzeugten neuen Arbeits-Containerinstanz im Diagnosemodus bei der Klassifizierungsdatenbank 40, siehe S18.

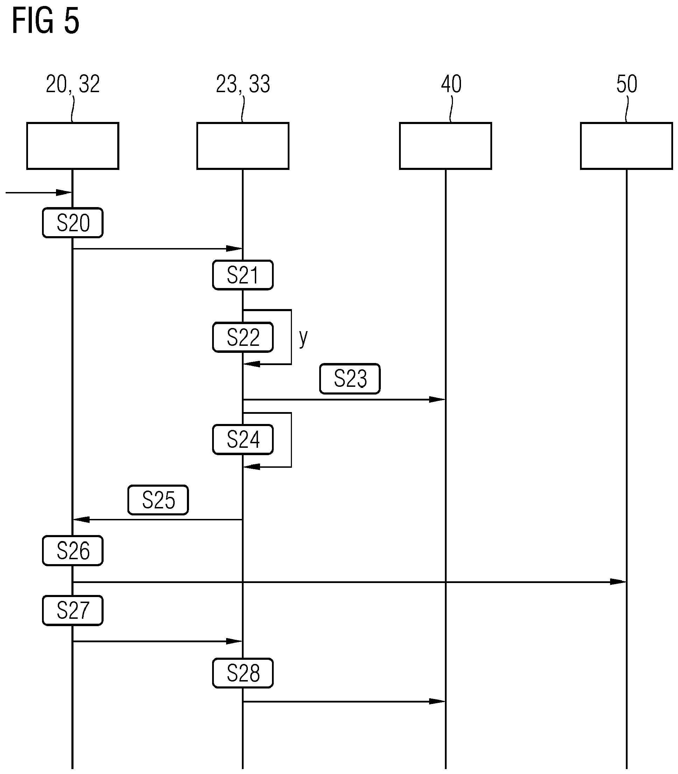

Fig. 5 zeigt den Ablauf beim Löschen einer Diagnose-Applikation auf dem Gerät 30 im System 10.

Wird eine Diagnose-App gelöscht, wird diese Information von der Laufzeitumgebung 32 bzw. der Orchestrierungseinrichtung weitergegeben, siehe S20, und in der Re-Konfigurationseinheit 23,33 empfangen S21. Dort wird eine Identifizierung/Klassifizierung S22 durchgeführt und als Ergebnis n ermittelt, dass es sich bei der zu löschenden Containerinstanz um eine Diagnoseinstanz handelt. Die Re-Konfigurationseinheit 23,33 ermittelt bestehende geänderte Arbeits-Containerinstanzen S23 durch Abfrage bei der Klassifizierungsdatenbank 40, insbesondere des Instanzmodus Inst-MOD und der Diagnose-Applikationsreferenz Diag-REF. Diagnosecontainer von anderen Diagnose-Applikationen, die aufgrund der zu löschenden Diagnose-Applikation geändert wurden, werden in gleicher Weise wie geänderte Arbeitscontainer in der Klassifizierungsdatenbank 20 geführt.

Die Re-Konfigurationseinheit 23,33 ermittelt den Re-Konfigurationsbedarf der im Diagnosemodus befindlichen Instanzen. Hier können auch aufgrund bestehender anderer Diagnose-Applikationen Instanzen im Diagnose-Modus verbleiben S24. Die Re-Konfigurationseinheit 23,33 ändert S25 die Konfiguration der ermittelten Arbeits-Containerinstanzen von Diagnose-Modus in den Standard-Modus, d.h. mit initialer Arbeits-konfigurationsinformation, und übermittelt diese an die Orchestrierungseinrichtung 20 bzw. die Laufzeitumgebung 32. Diese startet die Arbeitscontainer nun entsprechend der erhaltenen Konfigurationsinformation im Standard-Modus S26.

Die Diagnose-App kann durch die Orchestrierungseinrichtung 20 bzw. die Laufzeitumgebung 32 unmittelbar gelöscht werden. Nach einer Rückmeldung S27 über ein erfolgtes Starten der Arbeitscontainer mit initialer Arbeits-Konfigurationsinformation wird von der Re-Konfigurationseinheit 23,33 eine Anpassung de Einträge S28 in der Klassifizierungsdatenbank 40 veranlasst. Die bestehenden Arbeits-Containerinstanzen werden in den Standard-Modus zurückversetzt, sofern sie nicht aufgrund anderer Diagnose-Applikationen im Diagnose-Modus bleiben, was durch die Diagnose-Applikationsreferenz erkannt werden kann, indem in dem Eintrag überprüft wird, ob die zu ändernden Konfigurationsabschnitte erhalten bleiben. Die für die Diagnose-App hinterlegten Einträge werden gelöscht.

Sofern bei bestehenden Containerinstanzen kein Unterschied zwischen Diagnose- und Standard-Modus festgestellt wird, kann beim Umschalten zwischen Standard- und Diagnose-modus dies von der Re-Konfigurationseinheit 23, 33 ermittelt werden, sodass lediglich die geänderten Containerinstanzen neu gestartet werden. Das jeweilige Verhalten wird in der für die Re-Konfigurationsrichtlinie spezifiziert. Nicht-geänderte Instanzen erhalten bei einem solchen Verhalten innerhalb der Klassifizierungsdatenbank 40 kein Diagnose-Status.

In der Re-Konfigurationsrichtlinie kann zusätzlich spezifiziert werden, dass bestimmte Containerinstanzen aufgrund bestimmter, oben beschriebener Eigenschaften von einem Umkonfigurieren durch eine Diagnose-App ausgeschlossen werden sollen.

Somit können Diagnose-Apps Containerinstanzen anderer containerisierten Anwendungen zu Diagnosezwecken umkonfigurieren. Die für die Diagnose erforderlichen Operationen können entweder von der containerisierten Anwendung selbst oder durch die Diagnose Applikation definiert werden. Beide Verfahren sind hierbei kombinierbar. Es können mehrere Diagnose-Applikationen mit unterschiedlichen Aufgaben betrieben werden, die für unterschiedliche Anwendungen unterschiedliche Anpassung bzgl. des Diagnose-Zustandes ausführen. Es kann sowohl die komplette Anwendung bei der Versetzung in den Diagnose-Zustand neu gestartet werden oder einzelne, von der ReKonfiguration nicht betroffene Arbeits-Containerinstanzen davon ausgenommen werden. Das Verfahren kann sowohl in orchestrierten als auch in nicht-orchestrierten Umgebungen eingesetzt werden.

Alle Verfahrensschritte können durch die entsprechenden Geräte implementiert werden, die zum Ausführen des jeweiligen Verfahrensschrittes geeignet sind. Alle Funktionen, die von gegenständlichen Merkmalen ausgeführt werden können, können ein Verfahrensschritt des Verfahrens sein. Alle beschriebenen und/oder gezeichneten Merkmale können im Rahmen der Erfindung vorteilhaft miteinander kombiniert werden. Die Erfindung ist nicht auf die beschriebenen Ausführungsbeispiele beschränkt.

## Patentansprüche

1. Verfahren zur automatischen Zuweisung geänderter Berechtigungen zu Diagnosezwecken für bereits gestartete Arbeits-Containerinstanzen (34), die mindestens eine durch Container implementierte Anwendung auf einem Gerät (30) bereitstellen, umfassend:
in einer Re-Konfigurationseinheit (23, 33) einer Laufzeitumgebung (32) des Geräts (30) oder einer Orchestrierungseinrichtung (20),
- Empfangen (S1) einer Konfigurationsinformation zum Starten einer Containerinstanz,
- Identifizieren (S2) einer Diagnose-Konfigurationsinformation zur Bereitstellung von mindestens einer Diagnose-Containerinstanz (35) einer Diagnose-Applikation, der Diagnosetätigkeiten in Bezug auf den mindestens eine Arbeits-Containerinstanz der vorbestimmten Anwendung ausführt,
- Abrufen (S3) bestehender Arbeits-Containerinstanzen von einer Klassifizierungsdatenbank (40),
- Ermitteln (S4) eines Re-Konfigurationsbedarfs der abgerufenen Arbeits-Containerinstanzen abhängig von der Diagnose-Konfigurationsinformation in einer Re-Konfigurationseinheit (23, 33),
- Ändern (S5) einer initialen Arbeits-Konfigurationsinformation zur Bereitstellung von Diagnosedaten entsprechend der Diagnose-Konfigurationsinformation für jede Arbeits-Containerinstanz, für die ein Re-Konfigurationsbedarf ermittelt wurde,
in der Laufzeitumgebung (32) oder in der Orchestrierungseinrichtung (20),
- erneut Starten (S6) der geänderten Arbeits-Containerinstanzen entsprechend der geänderten Arbeits-Konfigurationsinformation, und
- Starten (S7) der mindestens einen Diagnose-Containerinstanz einer Diagnose-Applikation entsprechend der Diagnose-Konfigurationsinformation.

2. Verfahren nach Anspruch 1, wobei die geänderte Arbeits-Konfigurationsinformation und die Diagnose-Konfigurationsinformation in der Klassifizierungsdatenbank (40) abgespeichert werden.

3. Verfahren einem der vorangehenden Ansprüche, wobei die Arbeits-Konfigurationsinformation des mindestens einen Arbeitscontainers, für den Re-Konfigurationsbedarf ermittelt wurde, Diagnose-spezifische Marken mit veränderten Parametern umfasst, und die veränderten Parameter dann in der Arbeits-Konfigurationsinformation aktiviert werden, wenn die spezifische Diagnose-Konfigurationsinformation identifiziert wird, und/oder
wobei die Diagnose-Konfigurationsinformation Arbeitscontainer-spezifische Marken mit veränderten Parametern umfasst, und die veränderten Parameter dann in der Arbeits-Konfigurationsinformation des spezifische Arbeitscontainer aktiviert werden, wenn die Diagnose-Konfigurationsinformation identifiziert wird.

4. Verfahren nach Anspruch 3, wobei das Ändern der Arbeits-Konfigurationsinformationen zur Bereitstellung von Diagnosedaten mindestens einen der folgenden Parameter umfasst: ein Prozessprivileg, eine Netzwerkkonfiguration, eine Speicherkonfiguration oder einen (Linux-)Namensraum in dem der ermittelte Arbeitscontainer ausgeführt wird.

5. Verfahren nach einem der vorangegangenen Ansprüche, wobei die Diagnose-Konfigurationsinformation identifiziert wird aufgrund einer vorbestimmten Eigenschaft, die in der Diagnose-Konfigurationsinformation enthalten ist, oder
wobei die Diagnose-Konfigurationsinformation identifiziert wird aufgrund einer vorbestimmten und der Diagnose-Applikation zugeordneten Eigenschaft, die außerhalb der Diagnose-Konfigurationsinformation an die Laufzeitumgebung (32) des Geräts (30) oder die Orchestrierungseinrichtung (20) übergeben wird.

6. Verfahren nach Anspruch 5, wobei die Eigenschaft mindestens eine aus der Gruppe der folgenden Eigenschaften ist: ein erlaubter Zugriff auf bestimmte Ressourcen des Geräts (30), bestimmte Prozess-Privilegien, bestimmte Diagnose-spezifische-Marken, bestimmte Arbeitscontainer-spezifische-Marken, bestimmte Bereitstellungs-Signaturen oder bestimmte Image-Signaturen, eine Installation innerhalb eines bestimmten Mandanten.

7. Verfahren nach einem der vorangehenden Ansprüche, wobei die Arbeits-Konfigurationsinformation und/oder eine in der Arbeits-Konfigurationsinformation referenzierte Arbeits-Containerinstanz mit einem digitalen Signaturverfahren integritätsgesichert sind.

8. Verfahren nach einem der Ansprüche 5 bis 7, wobei diejenigen Eigenschaften, die zur Identifizierung der Diagnose-Konfigurationsinformation erforderlich sind, in einer Klassifizierungsrichtlinie spezifiziert werden und in der Re-Konfigurationseinheit (23, 33) bereitgestellt werden.

9. Verfahren nach einem der vorangehenden Ansprüche, wobei die Klassifizierungsdatenbank (40) für jede bereits gestartete Arbeits-Containerinstanz einen aktuellen Laufzeitmodus enthält, der angibt, ob die Arbeitscontainer-Instanz in einem Standardmodus entsprechend der initialen Arbeits-Konfigurationsinformation oder in einem Diagnosemodus entsprechend der geänderten Arbeits-Konfigurationsinformation vorliegt, sowie eine Referenz auf die aktuell gestartete Arbeits-Konfigurationsinformation enthält.

10. Verfahren nach einem der vorangehenden Ansprüche, wobei in der Re-Konfigurationseinheit (23, 33) ein Priorisierungsattribut zur Arbeits-Konfigurationsinformation enthalten ist, das angibt, ob eine weitere neu zu startende Arbeits-Containerinstanz bevorzugt entsprechend der geänderten oder der initialen Arbeits-Konfigurationsinformation gestartet wird.

11. Verfahren nach einem der vorangehenden Ansprüche, wobei eine Konflikterkennung beim Ermitteln des Re-Konfigurationsbedarfs auf den geänderten Arbeits-Konfigurationsinformationen in der Re-Konfigurationseinheit (23, 33) durchgeführt wird, wenn eine zweite oder weitere Diagnose-Konfigurationsinformation identifiziert wird.

12. Verfahren nach einem der vorangehenden Ansprüche, wobei, wenn eine weitere Arbeits-Containerinstanz einer weiteren Anwendung zum Starten auf der Laufzeitumgebung (32) empfangen wird, ein Re-Konfigurationsbedarf für die weitere Arbeits-Containerinstanz abhängig von der Diagnose-Konfigurationsinformation ermittelt wird und eine Konflikterkennung auf der weiteren zu startenden Arbeits-Konfigurationsinformationen durchgeführt wird.

13. Verfahren nach einem der vorangehenden Ansprüche, wobei beim Empfang einer Löschanforderung für die Diagnose-Applikation, ein Re-Konfigurationsbedarf in den geänderte Arbeits-Konfigurationsinformationen ermittelt durchgeführt wird.

14. System zur automatischen Zuweisung geänderter Berechtigungen zu Diagnosezwecken für bereits gestartete Arbeits-Containerinstanzen, die eine durch Container implementierte Anwendung auf einem Gerät bereitstellen, umfassend eine Laufzeitumgebung (32) auf dem Gerät (30) oder eine Orchestrierungseinrichtung (20), die die Bereitstellung der Anwendung durch Container steuert und eine Klassifizierungsdatenbank (40), die derart ausgebildet sind die folgenden Schritte durchzuführen:
in der Laufzeitumgebung (32) oder der Orchestrierungseinrichtung (20),
- Empfangen (S1) einer Konfigurationsinformation zum Starten einer Containerinstanz,
- Identifizieren (S2) einer Diagnose-Konfigurationsinformation zur Bereitstellung von mindestens einer Diagnose-Containerinstanz einer Diagnose-Applikation, der Diagnosetätigkeiten in Bezug auf den mindestens eine Arbeits-Containerinstanz der vorbestimmten Anwendung ausführt,
- Abrufen (S3) aller Arbeits-Containerinstanzen, die die Anwendung ausführen, von der Klassifizierungsdatenbank (40),
- Ermitteln (S4) eines Re-Konfigurationsbedarfs der abgerufenen Arbeits-Containerinstanzen abhängig von der Diagnose-Konfigurationsinformation in einer Re-Konfigurationseinheit (23, 33),
- Ändern (S5) einer initialen Arbeits-Konfigurationsinformation zur Bereitstellung von Diagnosedaten entsprechend der Diagnose-Konfigurationsinformation für jede Arbeits-Containerinstanz, für die ein Re-Konfigurationsbedarf ermittelt wurde,
in der Laufzeitumgebung (32) oder in der Orchestrierungseinrichtung (20),
- erneut Starten (S6) der geänderten Arbeits-Containerinstanzen entsprechend der geänderten Arbeits-Konfigurationsinformation, und
- Starten (S7) der mindestens einen Diagnose-Containerinstanz einer Diagnose-Applikation entsprechend der Diagnose-Konfigurationsinformation.

15. Computerprogrammprodukt, umfassend ein nicht flüchtiges computerlesbares Medium, das direkt in einen Speicher eines digitalen Computers ladbar ist, umfassend Programmcodeteile, die bei Ausführung der Programmcodeteile durch den digitalen Computer diesen veranlassen, die Schritte des Verfahrens nach einem der Ansprüche 1 bis 13 durchzuführen.
